# FASCICULE DE BREVET EUROPEEN

(11) **EP 2 071 152 B1**
(45) Date de publication et mention de la délivrance du brevet: **19.06.2019**
(21) Numéro de dépôt: 08162167.4
(22) Date de dépôt: 11.08.2008
(51) Int. Cl.: F02C 3/08, F04D 29/44, F02C 3/14

(54) **Diffuseur d'une turbomachine**
Diffusor eines Turbotriebwerks
Diffuser of a turbomachine

(30) Priorité: 13.08.2007 FR 0757050
(43) Date de publication de la demande: 17.06.2009
(73) Titulaire: Safran Aircraft Engines, 75015 Paris (FR)
(72) Inventeur: Commaret, Patrice, 77950, Rubelles (FR); Desaulty, Michel, 77240, Vert Saint Denis (FR); Lunel, Romain, 77170, Brie Compte Robert (FR); Rollet, Pascale, 91220, Le Plessis Pate (FR)
(74) Mandataire: Intès, Didier Gérard André

(56) Documents cités:
- EP-A- 1 788 310
- FR-A- 2 372 965
- US-A- 2 760 336
- US-A1- 2007 183 890
- SANBORN J W ET AL: "ADVANCED TURBOFAN ENGINE COMBUSTION SYSTEM DESIGN AND TEST VERIFICATION", JOURNAL OF PROPULSION AND POWER, AMERICAN INSTITUTE OF AERONAUTICS AND ASTRONAUTICS. NEW YORK, US, vol. 5, no. 4, 1 juillet 1989 (1989-07-01) , pages 502-509, XP000068028, ISSN: 0748-4658

## Description

L'invention concerne une turbomachine. Elle se destine à tout type de turbomachine, terrestre ou aéronautique, et plus particulièrement aux turboréacteurs d'avion.

Dans la présente demande, l'amont et l'aval sont définis par rapport au sens d'écoulement normal du gaz (de l'amont vers l'aval) à travers la turbomachine. Par ailleurs, on appelle axe de la turbomachine, l'axe de rotation du rotor de la turbomachine. La direction axiale correspond à la direction de l'axe de la turbomachine, et une direction radiale est une direction perpendiculaire à cet axe. De même, un plan axial est un plan contenant l'axe de la turbomachine et un plan radial est un plan perpendiculaire à cet axe. Enfin, sauf précision contraire, les adjectifs intérieur/interne et extérieur/externe sont utilisés en référence à une direction radiale de sorte que la partie intérieure/interne (i.e. radialement intérieure) d'un élément est plus proche de l'axe de la turbomachine que la partie extérieure/externe (i.e. radialement extérieure) du même élément.

L'invention concerne une turbomachine du type comprenant :
- une chambre de combustion annulaire avec un fond de chambre présentant des orifices d'injection, dans lesquels sont montés des systèmes d'injection ;
- un compresseur comportant un étage aval centrifuge ; et
- un diffuseur annulaire permettant de diffuser le courant de gaz sortant du compresseur et de diriger ce courant de gaz vers lesdits systèmes d'injection.

Un compresseur comportant un étage aval centrifuge comprend habituellement un impulseur rotatif. Cet impulseur comprend une série d'aubes entraînées en rotation et est réalisé de façon à accélérer le gaz qui le traverse.

Le diffuseur présente un espace annulaire entourant l'impulseur. Le diffuseur sert à réduire la vitesse du gaz quittant l'impulseur et, de ce fait, à accroître sa pression statique. Les diffuseurs peuvent être du type à aubes ou du type à conduits.

Ces deux types de diffuseur comprennent, en général, une partie amont annulaire orientée radialement qui présente une série de passages de diffusion raccordés à la sortie du compresseur pour récupérer le gaz accéléré sortant de celui-ci. Ces passages de diffusion ont une section qui s'accroît progressivement de l'amont vers l'aval afin de diffuser le courant de gaz sortant du compresseur. Les diffuseurs du type à aubes utilisent une série d'aubes espacées circulairement et formant entre elles ces passages de diffusion. Dans les diffuseurs du type à conduits, ces passages sont constitués par des éléments de tuyaux ou conduits, formés par exemple entre deux plaques opposées jointes.

En aval de cette partie amont, les diffuseurs comprennent, en général, une partie intermédiaire annulaire coudée, pour courber le trajet d'écoulement du diffuseur et ramener l'écoulement de gaz en direction de la chambre de combustion.

En aval de cette partie intermédiaire, les diffuseurs comprennent, en général, une partie aval annulaire comprenant une série d'aubes de redressement circulairement espacées, permettant de redresser l'écoulement de gaz et ainsi de réduire ou de supprimer le tourbillonnement circonférentiel de l'écoulement de gaz sortant des passages de diffusion, avant que cet écoulement n'entre dans la chambre de combustion.

Généralement, les centres des orifices d'injection de la chambre de combustion sont repartis autour de l'axe de la turbomachine, sur un cercle de rayon R1, tandis que le rayon moyen R2 de la partie aval du diffuseur est supérieur au rayon R1.

Dans certaines turbomachines connues, la partie aval du diffuseur suit la ligne du carter extérieur de la chambre et est dirigée vers la zone de contournement externe de la chambre (i.e. la zone de passage entre la chambre et le carter extérieur). En d'autres termes, dans un plan de coupe contenant l'axe de la turbomachine, l'axe moyen de la veine de courant en sortie de la partie aval du diffuseur, est parallèle à l'axe moyen de l'écoulement de contournement externe de la chambre. Cette solution est insatisfaisante car l'ensemble de l'écoulement de gaz principal sortant du diffuseur contourne extérieurement la chambre de combustion avant de se répartir entre l'écoulement externe et l'écoulement alimentant le fond de chambre et la zone de contournement interne de la chambre (i.e. la zone de passage entre la chambre et le carter intérieur). Les systèmes d'injection et la zone de contournement interne sont alors alimentés par un écoulement secondaire dévié de l'écoulement principal, cette déviation engendrant une perte de charge (i.e. une perte de pression) notable entre la sortie du diffuseur et l'amont du système d'injection et entre la sortie du diffuseur et la zone de contournement interne.

Les conséquences fonctionnelles d'une telle perte de charge sont les suivantes :
- La perte de charge importante entre la sortie du diffuseur et le système d'injection doit être compensée lors de la conception de la turbomachine par une augmentation globale de la perte de charge du module, entre la sortie du diffuseur et la sortie de la chambre de manière à conserver une chute de pression suffisante à la traversée du système d'injection pour assurer le mélange air-carburant et la combustion. Cette augmentation de la perte de charge du module entraîne une augmentation de la consommation de carburant.
- L'alimentation en gaz entre la zone de contournement externe et la zone de contournement interne de la chambre est fortement dissymétrique (les jets de gaz primaires et de dilution sont plus pénétrant en externe qu'en interne), ce qui rend plus difficile la maîtrise du profil de température en sortie de chambre.
- Une mauvaise alimentation en gaz de la zone de contournement interne entraîne une diminution des vitesses d'écoulement des gaz dans les dispositifs de refroidissement de la paroi interne de la chambre de combustion, ce qui réduit les coefficients d'échange convectif et donc l'efficacité globale de ce refroidissement.
- Une mauvaise alimentation en gaz de la zone de contournement interne entraîne un taux de surpression réduit diminuant l'efficacité du refroidissement du distributeur de turbine situé en aval de la chambre.

Pour éviter ces inconvénients, dans d'autres turbomachines connues, comme celle du document FR 2372965, la partie aval du diffuseur est inclinée par rapport à l'axe de la turbomachine, en direction de la chambre de combustion, de sorte que, dans un plan de coupe contenant l'axe de la turbomachine, l'axe moyen de la veine de courant en sortie de la partie aval du diffuseur, passe par le fond de chambre, entre le rayon maximum et le rayon minimum du fond de chambre. La veine de courant se définit comme étant l'enveloppe qui délimite l'espace d'écoulement du gaz, et donc le courant de gaz. Au niveau de la partie aval du diffuseur, cette veine est délimitée par le contour intérieur de cette partie aval.

Une telle inclinaison de la partie aval du diffuseur par rapport à l'axe de la turbomachine, en direction du fond de chambre, constitue un perfectionnement car elle permet de réduire la perte de charge entre la sortie du diffuseur et l'amont du système d'injection, en alimentant plus directement ces systèmes. Elle permet également d'alimenter en gaz, de façon plus symétrique, les zones de contournement externe et interne de la chambre, et aussi de mieux alimenter en gaz la zone de contournement interne. Par ailleurs, l'alimentation en gaz des différents canaux d'admission de chaque système d'injection est également plus homogène.

Les documents EP 1 788 310 et US 2007/0183890 décrivent d'autres exemples de diffuseurs.

L'invention vise à perfectionner ce dernier type de turbomachine, pour améliorer encore l'alimentation des systèmes d'injection.

Pour atteindre ce but, l'invention a pour objet une turbomachine, du dernier type précité (i.e. avec une partie aval du diffuseur inclinée par rapport à l'axe de la turbomachine, en direction du fond de chambre), selon l'objet de la revendication indépendante 1.

Lors des recherches ayant conduit à l'invention, les inventeurs ont trouvé que les aubes de redressement de la partie aval du diffuseur induisent des perturbations dans l'écoulement de gaz, en aval de leur bord de fuite (on parle de sillages), et que ces perturbations ont un effet néfaste sur l'alimentation en gaz des systèmes d'injection. Notamment, cette alimentation en gaz est moins symétrique autour de l'axe d'injection de ces systèmes. Or, plus on s'éloigne du bord de fuite des aubes de redressement, plus ces perturbations diminuent. L'invention propose donc d'éloigner suffisamment les orifices d'injection (et donc les systèmes d'injection) du bord de fuite des aubes de redressement, pour que ces orifices soient dans une zone de faible perturbation, voire de perturbation nulle, et ainsi améliorer l'alimentation des systèmes d'injection.

Grâce à l'invention, on constate une meilleure alimentation du système d'injection (en particulier plus symétrique autour de l'axe d'injection), ce qui permet, notamment, d'améliorer la stabilité de la combustion à bas régime, de mieux maîtriser le profil des températures en sortie de chambre et de limiter le risque de couplage non-stationnaire entre l'écoulement en sortie de diffuseur et la combustion.

D'un autre côté, les orifices d'injection ne doivent pas être trop éloignés des aubes de redressement pour limiter la perte de charge par éclatement entre la sortie du diffuseur et l'amont du système d'injection. Aussi, selon un mode de réalisation de l'invention, dans un plan de coupe contenant l'axe de la turbomachine et passant par le centre d'un desdits orifices d'injection, la distance, en abscisse curviligne, le long d'une ligne de courant entre le milieu de la veine de courant au bord de fuite des aubes de redressement et ledit centre, est inférieure ou égale à 9 fois la hauteur de ladite veine de courant au bord de fuite des aubes de redressement.

Pour améliorer le redressement de l'écoulement de gaz traversant la partie aval du diffuseur, il est préférable que le nombre d'aubes de redressement soit important sans toutefois générer un blocage aérodynamique préjudiciable à la marge au pompage de l'étage centrifuge. Aussi, selon un mode de réalisation de l'invention, le nombre d'aubes de redressement est supérieur au nombre de systèmes d'injection. Selon l'invention, le nombre d'aubes de redressement est au minimum 4 fois plus important que le nombre de systèmes d'injection. Plus le nombre d'aubes de redressement est important, plus les structures turbulentes induites par ces aubes sont nombreuses (mais de taille plus réduite), et plus l'invention présente d'intérêt, puisqu'elle permet de dissiper ces structure turbulentes sur la distance recommandée entre le bord de fuite des aubes de redressement et les orifices d'injection.

L'invention et ses avantages seront mieux compris à la lecture de la description détaillée qui suit, d'exemples de réalisation de l'invention donnés à titre illustratif et non limitatif. Cette description fait référence aux figures annexées sur lesquelles :
- les figures 1 à 3 représentent de manière schématique, en demi coupe axiale, le compresseur, le diffuseur et le module chambre de combustion de trois exemples de turboréacteur d'avion, conformes à l'invention;
- la figure 4 représente le module chambre de combustion de la figure 1, et les lignes de courant de l'écoulement de gaz traversant ce module; et
- la figure 5 représente partiellement la partie aval du diffuseur de la turbomachine de la figure 1, en section radiale, suivant le plan de coupe V-V.

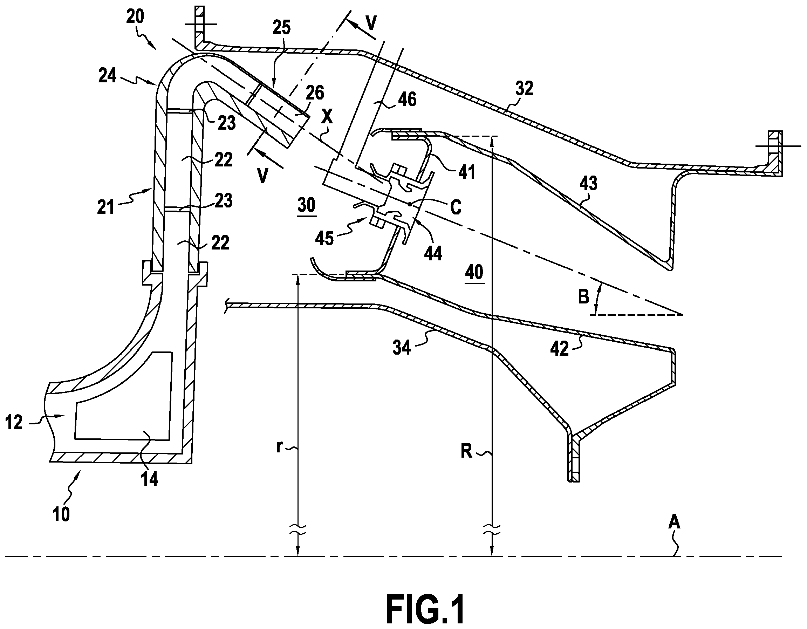

Les figures 1 à 3 représentent un exemple de turboréacteur, en demi-coupe axiale selon un plan de coupe contenant l'axe de rotation A du rotor du turboréacteur.

Le gaz traversant le turboréacteur est de l'air.

Le turboréacteur comprend un compresseur 10 haute pression dont la partie avale (visible sur la figures 1 à 3) est composée d'un étage centrifuge, un diffuseur 20 annulaire raccordé en aval du compresseur 10, ce diffuseur débouchant dans un espace 30 entourant une chambre de combustion 40 annulaire. Cet espace 30 est délimité par un carter extérieur 32 et un carter intérieur 34 concentriques. La chambre de combustion 40 est soutenue par des brides de fixation reliées aux carters 32 et 34.

Le compresseur 10 centrifuge comprend un impulseur rotatif 12. Cet impulseur 12 comprend une série d'aubes 14 mobiles, entraînées en rotation. L'impulseur 12 est réalisé de façon à accélérer l'air qui le traverse et, de ce fait, à accroître l'énergie cinétique de cet air.

Le diffuseur 20 présente un espace annulaire entourant l'impulseur. Le diffuseur 20 sert à réduire la vitesse de l'air quittant l'impulseur et, de ce fait, à accroître sa pression statique. Le diffuseur 20 des figures est du type à aubes.

Ce diffuseur 20 a une partie amont 21 annulaire orientée radialement qui présente une série de passages de diffusion 22 raccordés à la sortie du compresseur 10 pour récupérer l'air accéléré sortant de l'impulseur 12. Ces passages de diffusion 22 ont une section qui s'accroît progressivement de l'amont vers l'aval afin de diffuser le courant d'air sortant de l'impulseur. Ces passages de diffusion 22 sont formés par une série d'aubes 23 espacées circulairement. Au niveau de l'entrée de la partie amont 21, ces aubes 23 sont proches les unes des autres. Ces aubes 23 s'éloignent circonférentiellement les unes des autres à mesure qu'elles se rapprochent de la sortie de la partie amont 21.

En aval de la partie amont 21, le diffuseur 20 comprend une partie intermédiaire 24 annulaire coudée, pour courber le trajet d'écoulement du diffuseur et ramener l'écoulement d'air en direction de la chambre de combustion 40.

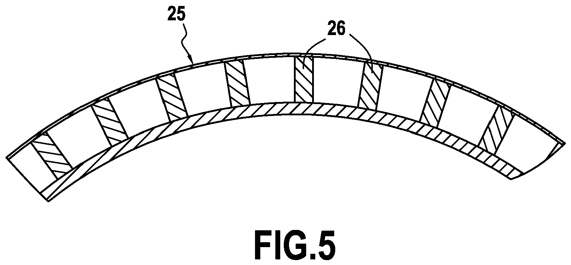

En aval de cette partie intermédiaire 24, le diffuseur 20 comprend une partie aval 25 annulaire comprenant une série d'aubes de redressement 26 circulairement espacées, pour supprimer ou limiter le tourbillonnement circonférentiel de l'écoulement d'air sortant des passages de diffusion 22, avant que cet écoulement d'air n'entre dans l'espace 30. La figure 5 représente les aubes de redressement 26 en section, dans un plan de coupe perpendiculaire à l'axe moyen X de la veine de courant en sortie de la partie aval 25 du diffuseur. Comme on le voit sur cette figure, les aubes de redressement 26 s'étendent radialement entre les parois intérieure et extérieure de la partie aval 25 du diffuseur.

La chambre de combustion 40 comprend une paroi intérieure 42 annulaire, une paroi extérieure 43 annulaire et un fond de chambre 41 annulaire disposé entre lesdites parois 42, 43, dans la région amont de ladite chambre. Ce fond de chambre 41 présente des orifices d'injection 44 répartis circulairement autour de l'axe A. Des systèmes d'injection 45 sont montés sur le fond de chambre, au travers desdits orifices d'injection 44 (à raison d'un système d'injection 45 par orifice d'injection 44). Ces systèmes d'injection 45 permettent d'injecter le mélange air/carburant qui est brûlé dans la chambre de combustion 40. Le carburant de ce mélange est amené jusqu'aux systèmes d'injection 45 par une conduite 46 d'alimentation en carburant traversant l'espace 30.

On appelle communément module de chambre de combustion l'ensemble constitué par la chambre de combustion 40, ses carters et son environnement proche.

La chambre de combustion 40 est inclinée par rapport à l'axe A du turboréacteur d'un angle aigu B (non nul). Plus cet angle aigu B est grand et plus l'encombrement axial du module chambre de combustion est réduit.

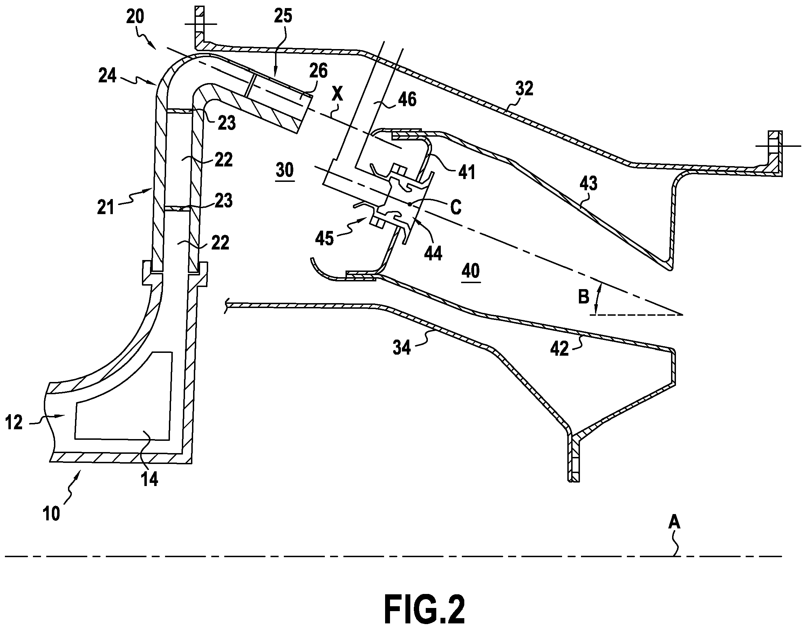

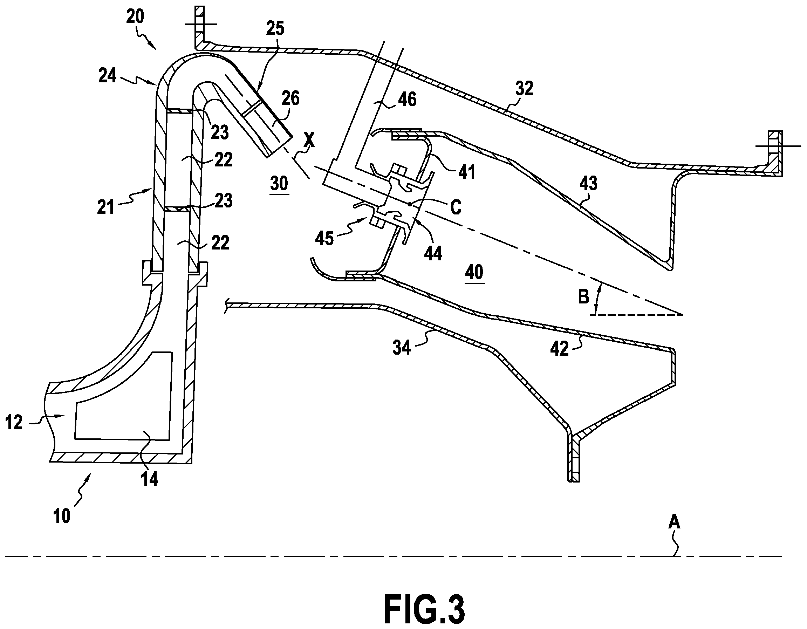

Afin que l'écoulement d'air sortant du diffuseur 20 soit orienté en direction des systèmes d'injection 45, la partie aval 25 du diffuseur 20 est inclinée par rapport à l'axe A du turboréacteur, en direction de la chambre de combustion, de sorte que, dans un plan de coupe contenant l'axe du turboréacteur, l'axe moyen X de la veine de courant en sortie de la partie aval 25 du diffuseur, passe par le fond de chambre 41, entre le rayon maximum R et le rayon minimum r du fond de chambre 41. Le fond de chambre 41 étant annulaire et centré sur l'axe A, les rayons r et R s'étendent depuis l'axe A suivant une direction radiale. Pour illustrer ceci, les figures 1 à 3 représentent trois exemples de chambre de combustion 40 pour lesquelles le critère d'inclinaison précité est respecté. Sur la figure 2, l'axe moyen X de la veine de courant en sortie de la partie aval 25 du diffuseur, passe par le fond de chambre 41 à proximité du rayon maximum R. Sur la figure 3, l'axe moyen X de la veine de courant en sortie de la partie aval 25 du diffuseur, passe par le fond de chambre 41 à proximité du rayon minimum r. Sur la figure 1, l'axe moyen X de la veine de courant en sortie de la partie aval 25 du diffuseur, passe par le fond de chambre 41 au niveau du centre C d'un orifice d'injection 44.

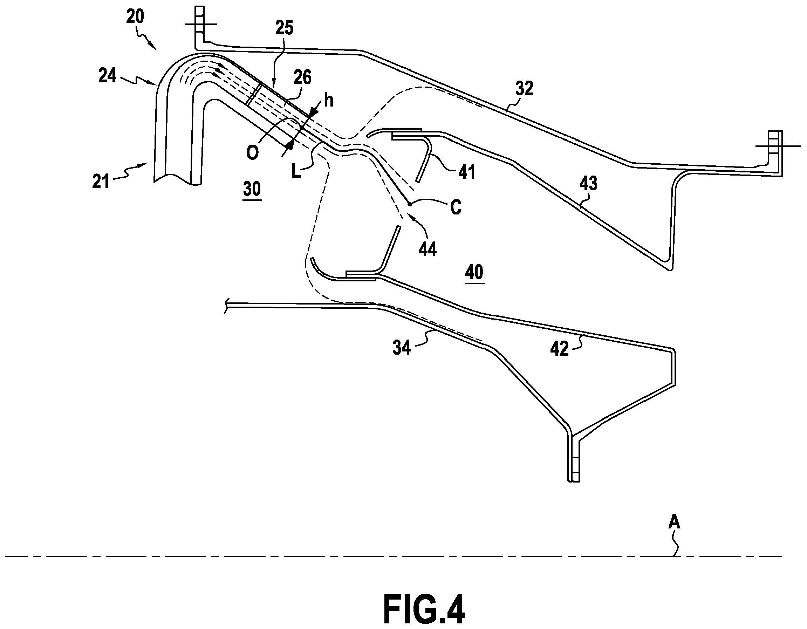

Conformément à l'invention et en référence à la figure 4 qui représente le module chambre de combustion de la figure 1 et les lignes de courant de l'écoulement d'air traversant ce module, si on se place dans le plan de coupe des figures 1 et 4 qui contient l'axe A du turboréacteur et qui passe par le centre C d'un orifice d'injection 44, la distance, en abscisse curviligne, le long d'une ligne de courant L entre le milieu O de la veine de courant au bord de fuite des aubes de redressement 26 et ledit centre C (c'est-à-dire la longueur de la portion de courbe appartenant à la ligne de courant L et allant de O à C), est supérieure ou égale à 3 fois la hauteur h de ladite veine de courant au bord de fuite des aubes de redressement (cette hauteur h correspond à la hauteur des aubes de redressement 26). D'autre part, cette distance, en abscisse curviligne, est inférieure ou égale à 9 fois la hauteur de ladite veine de courant au bord de fuite des aubes de redressement.

## Revendications

1. Turbomachine comprenant :
- une chambre de combustion (40) annulaire avec un fond de chambre (41) présentant des orifices d'injection (44) dans lesquels sont montés des systèmes d'injection (45);
- un compresseur (10) comportant un étage aval centrifuge; et
- un diffuseur annulaire (20) permettant de diffuser le courant de gaz sortant du compresseur (10) et de diriger ce courant de gaz vers lesdits systèmes d'injection, ce diffuseur comprenant : une partie amont (21) orientée radialement qui présente des passages de diffusion (22) raccordés à la sortie du compresseur ; une partie intermédiaire (24) coudée ; et une partie avale (25) comprenant une série d'aubes de redressement (26) circulairement espacées, cette partie aval (25) étant inclinée par rapport à l'axe (A) de la turbomachine, en direction de la chambre de combustion, de sorte que, dans un plan de coupe contenant l'axe (A) de la turbomachine, l'axe moyen (X) de la veine de courant en sortie de la partie aval (25) du diffuseur (20), passe par le fond de chambre (41), entre le rayon maximum (R) et le rayon minimum (r) du fond de chambre (41),
**caractérisée en ce que**, dans un plan de coupe contenant l'axe (A) de la turbomachine et passant par le centre (C) d'un desdits orifices d'injection (44), la distance, en abscisse curviligne, le long d'une ligne de courant (L) entre le milieu (O) de la veine de courant au bord de fuite des aubes de redressement (26) et ledit centre (C), est supérieure ou égale à trois fois la hauteur (h) de ladite veine de courant au bord de fuite des aubes de redressement (26), et **en ce que** le nombre d'aubes de redressement (26) est au minimum quatre fois plus important que le nombre de systèmes d'injection (45).

2. Turbomachine selon la revendication 1, dans laquelle, dans un plan de coupe contenant l'axe (A) de la turbomachine et passant par le centre (C) d'un desdits orifices d'injection (44), la distance, en abscisse curviligne, le long d'une ligne de courant (L) entre le milieu (O) de la veine de courant au bord de fuite des aubes de redressement (26) et ledit centre (C), est inférieure ou égale à 9 fois la hauteur (h) de ladite veine de courant au bord de fuite des aubes de redressement (26).

## Patentansprüche

1. Turbomaschine, umfassend:
- eine ringförmige Brennkammer (40) mit einem Kammerboden (41), der Einspritzöffnungen (44) aufweist, in denen Einspritzsysteme (45) montiert sind,
- einen Kompressor (10) mit einer nachgelagerten Zentrifugalstufe und
- einen ringförmigen Diffusor (20), der es ermöglicht, den Gasstrom aus dem Kompressor (10) zu diffundieren und diesen Gasstrom zu den Einspritzsystemen zu leiten, wobei der Diffusor umfasst: einen radial ausgerichteten vorgelagerten Abschnitt (21), der Diffusionsdurchgänge (22) aufweist, die mit dem Kompressorauslass verbunden sind, einen gekrümmten Zwischenabschnitt (24) und einen nachgelagerten Abschnitt (25), der eine Reihe von kreisförmig beabstandeten Begradigungsschaufeln (26) umfasst, wobei der nachgelagerte Abschnitt (25) in Bezug auf die Achse (A) der Turbomaschine in Richtung der Brennkammer geneigt ist, sodass, in einer Schnittebene, die die Achse (A) der Turbomaschine enthält, die Mittelachse (X) der Stromader am Ausgang des nachgelagerten Abschnitts (25) des Diffusors (20) durch den Kammerboden (41) verläuft, und zwar zwischen dem maximalen Radius (R) und dem minimalen Radius (r) des Kammerbodens (41), **dadurch gekennzeichnet, dass** in einer Schnittebene, die die Achse (A) der Turbomaschine enthält und durch das Zentrum (C) einer der Einspritzöffnungen (44) verläuft, auf einer kurvenförmigen Abszisse entlang einer Stromlinie (L) der Abstand zwischen der Mitte (O) der Stromader an der Abströmkante der Begradigungsschaufeln (26) und dem Zentrum (C) größer oder gleich der dreifachen Höhe (h) der Stromader an der Abströmkante der Begradigungsschaufeln (26) ist, und dass die Anzahl der Begradigungsschaufeln (26) mindestens viermal größer ist als die Anzahl der Einspritzsysteme (45).

2. Turbomaschine nach Anspruch 1, wobei in einer Schnittebene, die die Achse (A) der Turbomaschine enthält und durch das Zentrum (C) einer der Einspritzöffnungen (44) verläuft, auf einer kurvenförmigen Abszisse entlang einer Stromlinie (L) der Abstand zwischen der Mitte (O) der Stromader an der Abströmkante der Begradigungsschaufeln (26) und dem Zentrum (C) kleiner oder gleich der neunfachen Höhe (h) der Stromader an der Abströmkante der Begradigungsschaufeln (26) ist.

## Claims

1. A turbomachine comprising
• an annular combustion chamber (40) with a chamber end wall (41) presenting injection orifices (44) having injection systems (45) mounted therein;
• a compressor (10) having a centrifugal downstream stage; and
• an annular diffuser (20) enabling the gas flow leaving the compressor (10) to be diffused and said flow of gas to be directed towards said injection systems, the diffuser comprising: a radially-oriented upstream portion (21) that presents diffusion passages (22) connected to the outlet of the compressor; an elbow-shaped intermediate portion (24); and a downstream portion (25) comprising a series of circularly spaced apart flow-straightening vanes (26), the downstream portion (25) being inclined relative to the axis (A) of the turbomachine towards the combustion chamber, in such a manner that in the section plane containing the axis (A) of the turbomachine, the mean axis (X) of the flow path at the outlet from the downstream portion (25) of the diffuser (20) passes through the chamber end wall (41) between the maximum radius (R) and the minimum radius (r) of the chamber end wall (41);
the turbomachine being **characterized in that**, in the section plane containing the axis (A) of the turbomachine and passing via the center (C) of one of said injection orifices (44), the curvilinear abscissa distance along a flow line (12) between the middle (0) of the flow path at the trailing edges of the flow-straightening vanes (26) and said center (C), is greater than or equal to three times the height (h) of said flow path at the trailing edges of the flow-straightening vanes (26), and **in that** the number of flow-straightening vanes (26) is at least four times greater than the number of injection systems (45).

2. The turbomachine according to claim 1, in which, in a section plane containing the axis (A) of the turbomachine and passing via the center (C) of one of said injection orifices (44), the curvilinear abscissa distance along a flow line (L) between the middle (O) of the flow path at the trailing edges of the flow-straightening vanes (26) and said center (C) is less than or equal to nine times the height (h) of said flow path at the trailing edges of the flow-straightening vanes (26).
